Europäisches Patentamt

(19) European Patent Office

Office européen des brevets

(11) Publication number : **0 416 918 B1**

## EUROPEAN PATENT SPECIFICATION

(45) Date of publication of patent specification :
10.05.95 Bulletin 95/19

(51) Int. Cl.[6] : **H04N 7/24**

(21) Application number : 90309755.8

(22) Date of filing : 06.09.90

(54) Hybrid predictive coders and decoders for digital video signals.

(30) Priority : 07.09.89 GB 8920259

(43) Date of publication of application :
13.03.91 Bulletin 91/11

(45) Publication of the grant of the patent :
10.05.95 Bulletin 95/19

(84) Designated Contracting States :
AT BE CH DE DK ES FR GR IT LI LU NL SE

(56) References cited :
IEEE TRANSACTIONS ON COMMUNI-
CATIONS, vol. COM-29, no. 12, December
1981, pages 1799-1808; J.R. JAIN et al.:
"Displacement measurement and its appli-
cation in interframe image coding"
IDEM
IDEM

(56) References cited :
IEEE JOURNAL ON SELECTED AREAS IN
COMMUNICATIONS, vol. SAC-5, no. 7, August
1987, pages 1166-1174 New York, US; T. KOGA
et al.: "Entropy coding for a hybrid scheme
with motion compenstion in subprimary rate
video transmis- sion"
IEEE TRANSACTIONS ON BROADCASTING,
vol. BC-33, no. 4, December 1987, pages
188-196; T. TAKEGAHARA et al.: "Sound
transmission for HDTV using baseband multi-
plexing into MUSE video signal"

(73) Proprietor : BRITISH BROADCASTING
CORPORATION
Broadcasting House
London W1A 1AA (GB)

(72) Inventor : Wells, Nicholas Dominic
211 Queens Park Road
Brighton, BN2 2ZA (GB)

(74) Representative : Harland, Linda Jane et al
c/o Reddie & Grose
16 Theobalds Road
London WC1X 8PL (GB)

EP 0 416 918 B1

## Description

This invention relates to hybrid predictive coding and decoding of digital video signals, wherein the difference between the digital video signal and a prediction signal is subjected to a transform before effecting quantisation, namely a transform applied to the values of a block of pixels (which may in the simplest case be a row of pixels) to produce sets of coefficients in the spatial-frequency domain. It is known to utilise such a transform to produce de-correlated coefficients, and examples are the discrete cosine transform (DCT) and the slant transform which, together other possible transforms, are described in PRATT, W.K., Digital Image Processing, Wiley-Interscience, New York, 1978.

In hybrid DCT coding systems - whether motion-compensated or not - it is likely that transmission errors will produce significant impairments in the decoded picture even with periodic resetting and concealment strategies.

A paper by JAIN, J.R., and JAIN, A.K., published in IEEE Transactions on Communications, Vol. COM-29, No.12, December 1981, pages 1799 to 1808, entitled "Displacement Measurement and its Application in Interframe Image Coding" describes the use in a hybrid coder of an improved prediction method which involves introducing displacement measurement (i.e. movement compensation) into the predictor loop. They propose in relation to this to multiply the prediction by a temporal correlation factor $\alpha$, in order to improve the accuracy of the prediction, as shown in Figure 9 of the paper. The factor $\alpha$ will be in the range 0 to 1.

The use of predictor decay is also known in DPCM (differential phase code modulation) systems, but such systems operate essentially on a pixel-by-pixel basis. There is no block-based transform.

Reference is also made to a paper by TAKEGAHARA, T., TANABE, H., and SUGANAMI, H., published in IEEE Transactions on Broadcasting, Vol.BC-33, No.4, December 1987, pages 188 to 196, entitled "Sound Transmission for HDTV". This is not concerned with image coding, but with coding a straightforward serial audio signal. It mentions in column 2 on page 188 that truncation errors formed in a near instantaneous companding operation can be adjusted for.

In accordance with the present invention, which is defined in its various aspects in the appended claims, it is proposed to reduce the problem of impairments produced by transmission errors by multiplying the prediction signal in both the coder and decoder by a factor slightly less than unity to form a new prediction signal and, thereby, cause transmission errors to decay away, and also to truncate the new prediction signal; any bits discarded by the truncation of the prediction signal being added back into the prediction signal on a pixelwise or substantially pixel-by-pixel basis. This reduces the problem of truncation errors arising when the prediction error is multiplied by a fraction to introduce predictor decay and the product is truncated.

Truncation error feedback operating on a pixel-by-pixel basis would not be expected to be appropriate in coders and decoders using block-based transforms. Surprisingly, we have found that it is in fact a simple and satisfactory solution to the problem of truncation error which would, if uncorrected, destroy the advantage of using predictor decay.

The feedback introduces a filter function which shapes the truncation noise frequency spectrum. The precise form of feedback may be modified to achieve a desired shaping, eg. two-pixel by two-pixel feedback, or a combination of feedback terms of this simple nature.

The invention will now be explained in more detail, by way of example, with reference to the accompanying drawings, in which:

**Figure 1** is a block diagram of a hybrid predictive coder, and

**Figures 2 and 3** are block diagrams showing alternative circuits that can be used in the coder of Figure 1.

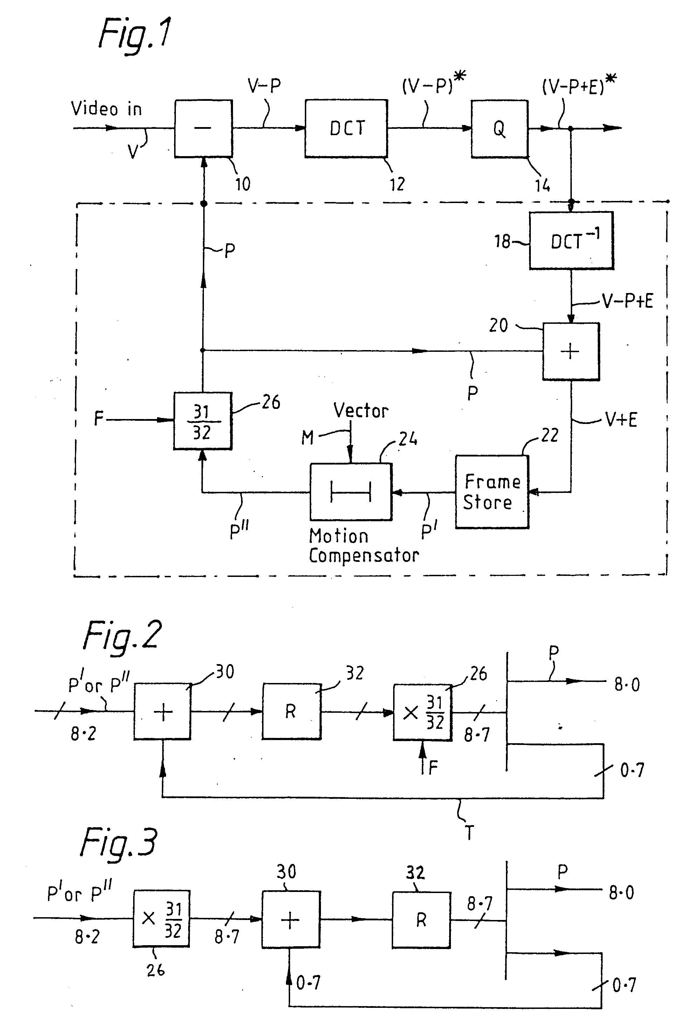

Figure 1 shows a hybrid predictive coder based upon a known predictive coder loop comprising a subtractor 10 which subtracts a prediction signal P from an input video signal V to form a difference signal D=V-P. This is transformed to (V-P)∗ by a DCT transform unit 12 of known form operating on a block 8 x 1 pixels (from one video line) or a block of 8 x 8 pixels in eight adjacent lines, to give two of many possible examples. (V-P)∗ is a set of coefficients in the spatial-frequency domain.

(V-P)∗ is fed to a quantiser 14 whose output is (V-P+E)∗ where E represents the quantizing error. This output is the coded information which is transmitted to the decoder.

The output is also applied to a decoding loop. Block 18 operates inversely on (V-P+E)∗ with an inverse DCT which is the inverse of the DCT provided by unit 12 to form V-P+E, to which P is added in an adder 20 to provide V+E. V+E is stored in a frame store 22 whose output is the basic prediction signal, denoted P′. The prediction signal may optionally be processed to P″ by a known motion compensator 24 responsive to a motion vector M which may be provided pixel-by-pixel or on a block basis.

The prediction signal P′ (or P″ if motion compensation is employed) is then multiplied by a decay factor in a multiplier 26, to which is fed a fixed decay factor F of a little less than unity. The output of the multiplier

2

EP 0 416 918 B1

is P, which is applied to the subtractor 10 and is recirculated to the adder 20.

A consequence of introducing predictor decay is to cause the effect of a transmission error to decay away within a number of frames. The decay time is determined by the decay factor. However, the amount of decay cannot be increased beyond a certain limit without impairing the performance of the predictor.

Specifically, a predictor decay factor of 31/32 together with truncation-error feedback is suggested. The truncation-error feedback removes low-frequency noise which is introduced by the truncation of the predictor accuracy to 8 bits, as explained below.

Increasing the decay reduces slightly the performance of the inter-frame predictor. As a consequence, the proportion of blocks coded in the intra-mode (spatial blocks) will be increased and the signal to noise ratio S/N will decrease.

The influence of decay factor on S/N has been measured for a few values of decay using a selected video frame sequence of seven frames. The results are given below in Table 1, relating to codec (coder/decoder) performance at 17Mbits/sec.

## TABLE 1

| DECAY FACTOR | 1.00 | 0.99 | 0.97 | 0.95 | 0.90 |
|---|---|---|---|---|---|
| Y S/N (dB) | 32.34 | 32.28 | 32.11 | 31.87 | 31.08 |
| U/V S/N (dB) | 33.68 | 33.62 | 33.57 | 33.46 | 33.08 |
| % SPATIAL BLOCKS | 3.74 | 4.88 | 7.71 | 10.26 | 17.76 |

From these results it can be seen that a decay factor of 0.97 (=31/32) causes only a slight degradation in S/N performance. With this decay factor an error will decay by one half or more within about 20 frames. For comparison, the typical time between periodic intra-mode resets might be about 50 frames.

It is probable that the decoding loop (frame stores, motion compensation stores and adders) of the complementary decoders will work to 8-bit accuracy for reasons of cost etc. In this case, as the effects of any transmission error decay away in the decoder, the truncation to 8 bits after multiplication by the decay factor adds a small random truncation-noise component into the decoder loop. Since the decoder loop has a gain given by:

$$\text{Gain of loop} = 1/(1 - \text{decay factor}),$$

the noise is, in effect, multiplied by the gain of the loop which is 32 for the proposed decay factor of 31/32. This means that, in the absence of resetting, the effect of limited accuracy in the coder and decoder decoding loops is clearly visible, particularly as low-frequency noise on the decoded picture.

We have appreciated that the visibility of this noise can be reduced by feeding back the truncation error in both the coder and decoder on a pixel-by-pixel basis. This is shown in Figures 2 and 3. The feedback removes any low-frequency component in the truncation error. The same feedback must be applied at both coder and decoder.

The circuit of Figure 2 replaces the multiplier 26 in Figure 1. The multiplier 26 is incorporated in Figure 2 and its output is partitioned into a most significant 8 bits representing P and a least significant 7 bits representing a truncation error T. In Figure 2 the symbolism 8.7 (for example) indicates an 8-bit whole number portion with 7 fractional bits. An adder 30 adds the truncation error to P′ or P″ and the sum is buffered in a set of fifteen D-type latches forming a register 32 clocked at pixel rate. The register 32 provides the input to the multiplier 26. Figure 3 shows an alternative to the circuit of Figure 2, in which the adder and register are connected after the multiplier in the loop.

As noted in the introduction above, the precise form of feedback may be modified to achieve a desired truncation noise frequency spectrum shaping, e.g. two-pixel by two-pixel feedback, or a combination of feedback terms of this simple nature.

The effects of error decay can be demonstrated using a coder-only simulation by forcing to zero the input of the local decoder 18 and then observing the decay of the existing information in the local-decoder framestore 22. Without error feedback, the areas of positive feedback decay to zero, and the negative areas tend to decay to level -31 (assuming mid-grey is level zero). With error feedback all areas decay to level zero.

Introduction of a predictor decay at 31/32 together with truncation error feedback on a pixel-wise basis improves the performance of the decoder in the presence of transmission errors without significantly changing the picture quality in the absence of errors.

The decoder is not shown separately, but is simply outlined in chain-dotted lines on Figure 1. As is well known it will comprise blocks 18, 20, 22 and 26 of Figure 1 with the received signal (V-P+E)∗ applied to the input to block 18, the inverse transform. Block 26 is again replaced by either of the circuits shown in Figures 2 and 3. The same circuit must be chosen for use in both the coder and decoder.

**Claims**

1. A method of transmitting an input digital video signal, the method comprising, at a coder:
   forming a difference signal representing the difference between an input video signal and a prediction signal;
   transform coding successive blocks of pixels in the difference signal to produce sets of coefficients in the spatial-frequency domain;
   quantising the coefficients to produce a coded output signal for transmission; and
   decoding the coded output signal to generate the prediction signal; and
   at a decoder:
   receiving the coded transmitted signal; and
   decoding the coded transmitted signal to generate a prediction signal as a decoded output signal;
   and in which each decoding step comprises:
   inverse transform coding successive blocks of the respective coded signal using a transform function which is the inverse of the transform function used in the transform coding in the coder, to provide an inverse transformed signal;
   combining the inverse transformed signal with the prediction signal in an adder to produce a recirculating prediction signal; and
   multiplying the recirculating prediction signal by a factor slightly less than unity to produce said prediction signal;
   characterized by truncating the multiplied signal and adding any bits discarded by the truncation back into the recirculating signal on a pixel-wise basis.

2. A method according to claim 1, in which the said factor is a fixed factor.

3. A method according to claim 1 or 2, in which the said factor is greater than 0.9.

4. A method according to claim 3, in which the said factor is 31/32.

5. A method according to any preceding claim, including the step of motion compensating the recirculating signal between the combining and multiplying steps.

6. A method according to any preceding claim including the step of storing a frame of the recirculating signal.

7. A method according to any preceding claim, in which the transform is a discrete cosine transform.

8. A method according to any preceding claim, in which the discarded bits are added back to the recirculating input to the multiplication.

9. A method according to any preceding claim, in which the discarded bits are added back on a pixel-by-pixel basis, on a two-pixel by two-pixel basis, or on the basis of a simple combination of pixels.

10. A coding method for use in the method of claim 1, comprising:
    forming a difference signal representing the difference between an input video signal and a prediction signal;
    transform coding successive blocks of pixels in the difference signal to produce sets of coefficients in the spatial-frequency domain;
    quantising the coefficients to produce a coded output signal for transmission;
    inverse transform coding successive blocks of the coded output signal using a transform function which is the inverse of the transform function used in the transform coding to provide an inverse transformed signal;
    combining the inverse transformed signal with the prediction signal in an adder to produce a recirculating prediction signal; and
    multiplying the recirculating prediction signal by a factor slightly less than unity to produce said prediction signal;

characterized by truncating the multiplied signal and adding any bits discarded by the truncation back into the recirculating signal on a pixel-wise basis.

11. A decoding method for use in the method of claim 1, comprising:

receiving a coded transmitted signal;

inverse transform coding successive blocks of the coded transmitted signal to provide an inverse transformed signal;

combining the inverse transformed signal with the prediction signal in an adder to produce a recirculating prediction signal; and

multiplying the recirculating prediction signal by a factor slightly less than unity to produce said prediction signal;

characterized by truncating the multiplied signal and adding any bits discarded by the truncation back into the recirculating signal on a pixel-wise basis.

12. Coding apparatus for use in the method of claim 1, comprising:

a subtractor (10) for forming a difference signal (V-P) representing the difference between an input video signal (V) and a prediction signal (P);

a transform coder (12) operative on successive blocks of pixels in the difference signal to produce sets of coefficients in the spatial-frequency domain;

a quantiser (14) for quantising the coefficients to produce a coded output for transmission;

an inverse transform coder (18) operative on successive blocks of pixels in the coded signal and using a transform which is the inverse of that used in the transform coder, to provide an inverse transformed signal; and

a recirculating loop comprising combining means (20) for combining the inverse transformed signal with the prediction signal, and a multiplier (26) for multiplying the recirculating prediction signal by a factor slightly less than unity;

characterized in that the multiplied signal is truncated, and by means (30) for adding any bits discarded by the truncation back into the recirculating signal on a pixel-wise basis.

13. Decoding apparatus for use in the method of claim 1, comprising:

means for receiving a coded transmitted signal;

an inverse transform coder (18) operative on successive blocks of pixels in the coded signal to provide an inverse transformed signal; and

a recirculating loop comprising combining means (20) for combining the inverse transformed signal with the prediction signal, and a multiplier (26) for multiplying the recirculating prediction signal by a factor slightly less than unity;

characterized in that the multiplied signal is truncated, and by means (30) for adding any bits discarded by the truncation back into the recirculating signal a pixel-wise basis.

14. Apparatus according to claim 12 or 13, in which the said factor is a fixed factor.

15. Apparatus according to claim 12, 13 or 14, in which the said factor is greater than 0.9.

16. Apparatus according to claim 14, in which the said factor is 31/32.

17. Apparatus according to any of claims 12 to 16, including a motion compensator (24) for motion compensating the recirculating signal between the combining means (20) and the multiplier (26).

18. Apparatus according to any of claims 12 to 17, including a frame store (22) between the combining means (20) and the multiplier (26).

19. Apparatus according to use in any of claims 12 to 18, in which the inverse transform coder (18) is an inverse discrete cosine transform coder.

20. Apparatus according to any of claims 12 to 19, in which the adding means (30) is located at the recirculating input to the multiplier.

21. Apparatus according to any of claims 12 to 20, in which the adding means adds the discarded bits back on a pixel-by-pixel basis, on a two-pixel by two-pixel basis, or on the basis of a simple combination of pixels.

## Patentansprüche

1. Verfahren zum Übertragen eines digitalen Eingangsvideosignals, bei dem in einem Codierer
ein Differenzsignal, das die Differenz zwischen einem Eingangsvideosignal und einem Prädiktionssignal darstellt, gebildet wird;
aufeinanderfolgende Blöcke aus Pixeln in dem Differenzsignal transformationscodiert werden, um Koeffizientengruppen im Raum-Frequenz-Bereich zu erzeugen;
die Koeffizienten quantisiert werden, um ein codiertes Ausgangssignal zur Übertragung zu erzeugen; und
das codierte Ausgangssignal decodiert wird, um das Prädiktionssignal zu erzeugen; und
in einem Decodierer
das codierte übertragene Signal empfangen wird und
das codierte übertragene Signal decodiert wird, um ein Prädiktionssignal als decodiertes Ausgangssignal zu erzeugen;
und bei dem jeder Decodierschritt aufweist:
eine inverse Transformationscodierung aufeinanderfolgender Blöcke des jeweils codierten Signals mittels einer Transformationsfunktion, die die Umkehrung der bei der Transformationscodierung im Codierer angewandten Transformationsfunktion ist, um ein umgekehrt transformiertes Signal zu bilden;
das Überlagern des umgekehrt transformierten Signals mit dem Prädiktionssignal in einem Addierer, um ein umlaufendes Prädiktionssignal zu erzeugen; und
das Multiplizieren des umlaufenden Prädiktionssignals mit einem Faktor, der etwas kleiner als eins ist, um das Prädiktionssignal zu erzeugen;
**dadurch gekennzeichnet**, daß das multiplizierte Signal abgebrochen wird und alle Bits, die durch das Abbrechen verlorengehen, dem umlaufenden Signal pixelweise wieder zugesetzt werden.

2. Verfahren nach Anspruch 1, bei dem der erwähnte Faktor ein fester Faktor ist.

3. Verfahren nach Anspruch 1 oder 2, bei dem der Faktor größer als 0,9 ist.

4. Verfahren nach Anspruch 3, bei dem der Faktor 31/32 ist.

5. Verfahren nach einem der vorstehenden Ansprüche, bei dem das umlaufende Signal zwischen der Überlagerung und der Multiplikation einer Bewegungskompensation unterzogen wird.

6. Verfahren nach einem der vorstehenden Ansprüche, bei dem ein Bild des umlaufenden Signals gespeichert wird.

7. Verfahren nach einem der vorstehenden Ansprüche, bei dem die Transformation eine diskrete Cosinustransformation ist.

8. Verfahren nach einem der vorstehenden Ansprüche, bei dem die verlorengegangenen Bits der umlaufenden Eingangsgröße der Multiplikation wieder zugesetzt werden.

9. Verfahren nach einem der vorstehenden Ansprüche, bei dem die verlorengegangenen Bits pixelweise, zweipixelweise oder auf der Basis einer einfachen Kombination von Pixeln wieder zugesetzt werden.

10. Codierverfahren zur Anwendung in dem Verfahren nach Anspruch 1, bei dem
ein Differenzsignal, das die Differenz zwischen einem Eingangsvideosignal und einem Prädiktionssignal darstellt, gebildet wird;
aufeinanderfolgende Pixelblöcke des Differenzsignals einer Transformationscodierung unterzogen werden, um Koeffizientengruppen im Raum-Frequenz-Bereich zu erzeugen;
die Koeffizienten quantisiert werden, um ein codiertes Ausgangssignal zur Übertragung zu erzeugen;
aufeinanderfolgender Blöcke des codierten Ausgangssignals einer inversen Transformation durch Anwendung einer Transformationsfunktion unterzogen werden, die die Umkehrung der Transformationsfunktion ist, die bei der Transformationscodierung angewandt wurde, um ein umgekehrt transformiertes Signal zu erzeugen;

das umgekehrt transformierte Signal mit dem Prädik-tionssignal in einem Addierer überlagert wird, um ein umlaufendes Prädiktionssignal zu erzeugen; und

das umlaufende Prädiktionssignal mit einem Faktor multipliziert wird, der etwas kleiner als eins ist, um das Prädiktionssignal zu erzeugen;

**dadurch gekennzeichnet**, daß das multiplizierte Signal abgebrochen wird und alle Bits, die durch das Abbrechen verlorengehen, dem umlaufenden Signal pixelweise wieder zugesetzt werden.

11. Decodierverfahren zur Anwendung in dem Verfahren nach Anspruch 1, bei dem

ein codiertes übertragenes Signal empfangen wird;

aufeinanderfolgende Blöcke des codierten übertragenen Signals einer inversen Transformationscodierung unterzogen werden, um ein umgekehrt transformiertes Signal zu bilden;

das umgekehrt transformierte Signal mit dem Prädiktionssignal in einem Addierer überlagert wird, um ein umlaufendes Prädiktionssignal zu erzeugen; und

das umlaufende Prädiktionssignal mit einem Faktor multipliziert wird, der etwas kleiner als eins ist, um das Prädiktionssignal zu erzeugen;

**dadurch gekennzeichnet**, daß das multiplizierte Signal abgebrochen wird und alle Bits, die durch das Abbrechen verlorengehen, dem umlaufenden Signal pixelweise wieder zugesetzt werden.

12. Codiervorrichtung zur Verwendung in dem Verfahren nach Anspruch 1, die aufweist:

einen Subtrahierer (10) zur Bildung eines Differenzsignals (V-P), das die Differenz zwischen einem Eingangsvideosignal (V) und einem Prädiktionssignal (P) darstellt;

einen Transformationscodierer (12), der auf aufeinanderfolgende Pixelblöcke des Differenzsignals einwirkt, um Koeffizientengruppen im Raum-Frequenz-Bereich zu erzeugen;

einen Quantisierer (14) zum Quantisieren der Koeffizienten, um ein codiertes Ausgangssignal zur Übertragung zu erzeugen;

einen Inverstransformationscodierer (18), der auf aufeinanderfolgende Pixelblöcke des codierten Signals einwirkt und eine Transformation bewirkt, die die Umkehrung derjenigen ist, die in dem Transformationscodierer angewandt wurde, um ein umgekehrt transformiertes Signal zu bilden; und

einen Umlaufkreis, der Überlagerungsmittel (20) zum Überlagern des umgekehrt transformierten Signals mit dem Prädiktionssignal und einen Multiplizierer (26) zum Multiplizieren des umlaufenden Prädiktionssignals mit einem Faktor, der etwas kleiner als eins ist, aufweist;

**dadurch gekennzeichnet**, daß das multiplizierte Signal abgebrochen ist und Mittel (30) vorgesehen sind, um Bits, die durch das Abbrechen verlorengegangen sind, dem umlaufenden Signal pixelweise wieder zuzusetzen.

13. Decodiervorrichtung zur Verwendung in dem Verfahren nach Anspruch 1, die aufweist:

Mittel zum Empfangen eines codierten übertragenen Signals;

einen Inverstransformationscodierer (18), der auf aufeinanderfolgende Pixelblöcke im codierten Signal einwirkt, um ein umgekehrt transformiertes Signal zu bilden; und

einen Umlaufkreis, der ein Überlagerungsmittel (20), um das umgekehrt transformierte Signal mit dem Prädiktionssignal zu überlagern, und einen Multiplizierer (26) zum Multiplizieren des umlaufenden Prädiktionssignals mit einem Faktor, der etwas kleiner als eins ist, aufweist;

**dadurch gekennzeichnet**, daß das multiplizierte Signal abgebrochen ist und ein Addiermittel (30) vorgesehen ist, um Bits, die durch das Abbrechen verloren gegangen sind, dem umlaufenden Signal pixelweise wieder zuzusetzen.

14. Vorrichtung nach Anspruch 12 oder 13, bei dem der Faktor ein fester Faktor ist.

15. Vorrichtung nach Anspruch 12, 13 oder 14, bei dem der Faktor größer als 0,9 ist,

16. Vorrichtung nach Anspruch 14, bei dem der Faktor 31/32 ist.

17. Vorrichtung nach einem der Ansprüche 12 bis 16, mit einem Bewegungskompensator (24) zur Bewegungskompensation des umlaufenden Signals zwischen dem Überlagerungsmittel (20) und dem Multiplizierer (26).

18. Vorrichtung nach einem der Ansprüche 12 bis 17, mit einem Bildspeicher (22) zwischen dem Überlagerungsmittel (20) und dem Multiplizierer (26).

19. Vorrichtung zur Anwendung bei einem der Ansprüche 12 bis 18, bei dem der Inverstransformationscodierer (18) ein Codierer für eine inverse diskrete Cosinustransformation ist.

20. Vorrichtung nach einem der Ansprüche 12 bis 19, bei dem das Addiermittel (30) am Umlaufeingang zum Multiplizierer angeordnet ist.

21. Vorrichtung nach einem der Ansprüche 12 bis 20, bei dem das Addiermittel die verlorengegangenen Bits pixelweise, zweipixelweise oder auf der Basis einer einfachen Kombination von Pixeln wieder zusetzt.


## Revendications

1. Procédé de transmission d'un signal vidéo numérique d'entrée, le procédé comprenant, dans un codeur:
la formation d'un signal de différence représentant la différence entre un signal vidéo d'entrée et un signal de prédiction;
le codage par transformation des blocs successifs de pixels du signal de différence, afin de produire des ensembles de coefficients dans le domaine spatial-fréquence;
la quantification des coefficients afin de produire un signal de sortie codé pour la transmission; et
le décodage du signal de sortie codé afin de générer un signal de prédiction; et
dans un décodeur:
la réception du signal transmis codé; et
le décodage du signal transmis codé afin de générer un signal de prédiction en tant que signal de sortie décodé;
et dans lequel chaque étape de décodage comprend:
le codage par transformation inverse des blocs successifs du signal codé respectif en utilisant une fonction de transformation qui est l'inverse de la fonction de transformation utilisée dans le codage par transformation du codeur, afin de fournir un signal transformé inverse;
l'association du signal transformé inverse avec le signal de prédiction dans un additionneur, afin de produire un signal de prédiction remis en circulation; et
la multiplication du signal de prédiction remis en circulation par un facteur légèrement inférieur à l'unité afin de produire ledit signal de prédiction;
caractérisé par la troncature du signal multiplié et l'addition de tous les bits éliminés par la troncature en retour dans le signal remis en circulation, pixel par pixel.

2. Procédé selon la revendication 1, dans lequel ledit facteur est un facteur fixe.

3. Procédé selon la revendication 1 ou 2, dans lequel ledit facteur est supérieur à 0,9.

4. Procédé selon la revendication 3, dans lequel ledit facteur est 31/32.

5. Procédé selon l'une quelconque des revendications précédentes, comportant l'étape de compensation de mouvement du signal remis en circulation entre les étapes d'association et de multiplication.

6. Procédé selon l'une quelconque des revendications précédentes, comportant l'étape de stockage d'une trame du signal remis en circulation.

7. Procédé selon l'une quelconque des revendications précédentes, dans lequel la transformation est une transformation en cosinus discret.

8. Procédé selon l'une quelconque des revendications précédentes, dans lequel les bits éliminés sont ajoutés en retour à l'entrée de remise en circulation vers la multiplication.

9. Procédé selon l'une quelconque des revendications précédentes, dans lequel les bits éliminés sont ajoutés en retour, pixel par pixel, deux pixels par deux pixels, ou sur la base d'une simple association de pixels.

10. Procédé de codage destiné à être utilisé dans le procédé de la revendication 1, comprenant:
la formation d'un signal de différence représentant la différence entre un signal vidéo d'entrée et un signal de prédiction;

le codage par transformation des blocs successifs de pixels du signal de différence, afin de produire des ensembles de coefficients dans le domaine spatial-fréquence;

la quantification des coefficients afin de produire un signal de sortie codé pour la transmission;

le codage par transformation inverse des blocs successifs du signal de sortie codé respectif en utilisant une fonction de transformation qui est l'inverse de la fonction de transformation utilisée dans le codage par transformation du codeur, afin de fournir un signal transformé inverse;

l'association du signal transformé inverse avec le signal de prédiction dans un additionneur, afin de produire un signal de prédiction remis en circulation; et

la multiplication du signal de prédiction remis en circulation par un facteur légèrement inférieur à l'unité, afin de produire ledit signal de prédiction;

caractérisé par la troncature du signal multiplié et l'addition de tous les bits éliminés par la troncature en retour dans le signal remis en circulation, pixel par pixel.

11. Procédé de décodage destiné à être utilisé dans le procédé de la revendication 1, comprenant:

la réception d'un signal transmis codé; et

le codage par transformation inverse des blocs successifs du signal transmi codé, afin de fournir un signal transformé inverse;

l'association du signal transformé inverse avec le signal de prédiction dans un additionneur afin de produire un signal de prédiction remis en circulation; et

la multiplication du signal de prédiction remis en circulation par un facteur légèrement inférieur à l'unité, afin de produire ledit signal de prédiction;

caractérisé par la troncature du signal multiplié et l'addition de tous les bits éliminés par la troncature en retour dans le signal remis en circulation, pixel par pixel.

12. Appareil de codage destiné à être utilisé dans le procédé de la revendication 1, comprenant:

un soustracteur (10) destiné à former un signal de différence (V-P) représentant la différence entre un signal d'entrée vidéo (V) et un signal de prédiction (P);

un codeur de transformation (12) opérant sur des blocs successifs de pixels situés dans le signal de différence, pour produire des ensembles de coefficients dans le domaine spatial-fréquence;

un quantificateur (14) destiné à quantifier les coefficients, pour produire une sortie codée pour la transmission;

un codeur de transformation inverse (18) opérant sur des blocs successifs de pixels situés dans le signal codé, et utilisant une transformation qui est l'inverse de celle qui est utilisée dans le codeur de transformation, afin de fournir un signal transformé inverse; et

une boucle de remise en circulation comprenant un moyen d'association (20), destiné à associer le signal transformé inverse au signal de prédiction, et un multiplieur (26) destiné à multiplier le signal de prédiction remis en circulation par un facteur légèrement inférieur à l'unité;

caractérisé en ce que le signal multiplié est tronqué, et par un moyen (30) pour additionner tous les bits éliminés par la troncature, en retour dans le signal remis en circulation, par pixel.

13. Appareil de décodage destiné à être utilisé dans le procédé de la revendication 1, comprenant:

un moyen pour recevoir un signal transmis codé;

un codeur de transformation inverse (18) opérant sur des blocs successifs de pixels situés dans le signal codé, pour fournir un signal transformé inverse; et

une boucle de remise en circulation comprenant un moyen d'association (20), destiné à associer le signal transformé inverse au signal de prédiction, et un multiplieur (26) destiné à multiplier le signal de prédiction remis en circulation par un facteur légèrement inférieur à l'unité;

caractérisé en ce que le signal multiplié est tronqué, et par un moyen (30) pour additionner tous les bits éliminés par la troncature, en retour dans le signal remis en circulation, par pixel.

14. Appareil selon la revendication 12 ou 13, dans lequel ledit facteur est un facteur fixe.

15. Appareil selon la revendication 12, 13 ou 14, dans lequel ledit facteur est supérieur à 0,9.

16. Appareil selon la revendication 14, dans lequel ledit facteur est 31/32.

17. Appareil selon l'une quelconque des revendications 12 à 16, comportant un compensateur de mouvement (24), destiné à compenser en mouvement le signal remis en circulation, situé entre le moyen d'association (20) et le multiplieur (26).

18. Appareil selon l'une quelconque des revendications 12 à 17, comportant une mémoire de trame (22), située entre le moyen d'association (20) et le multiplieur (26).

19. Appareil selon l'une quelconque des revendications 12 à 18, dans lequel le codeur de transformation inverse (18) est un codeur de transformation en cosinus discret.

20. Appareil selon l'une quelconque des revendications 12 à 19, dans lequel le moyen additionneur (30) est situé à l'entrée de remise en circulation du multiplieur.

21. Appareil selon l'une quelconque des revendications 12 à 20, dans lequel le moyen additionneur additionne les bits éliminés en retour, pixel par pixel, deux pixels par deux pixels, ou sur la base d'une simple association de pixels.

*Fig.1*

*Fig.2*

*Fig.3*